# EUROPEAN PATENT SPECIFICATION

(11) **EP 2 082 646 B1**
(45) Date of publication and mention of the grant of the patent: **17.07.2013**
(21) Application number: 09000894.7
(22) Date of filing: 22.01.2009
(51) Int. Cl.: A21C 11/00

(54) **Apparatus for forming and calibrating a dough disk**
Vorrichtung zum Formen und Kalibrieren einer Teigscheibe
Dispositif pour former et calibrer un disque de pâte.

(30) Priority: 25.01.2008 IT VI20080017
(43) Date of publication of application: 29.07.2009
(73) Proprietor: Iteca S.p.A., 37050 Palù (VR) (IT)
(72) Inventor: Benetti, Luigi, 37031 Illasi (Verona) (IT); Rizzi, Andrea, 37041 Albaredo D'Adige (Verona) (IT)
(74) Representative: Autuori, Angelo

(56) References cited:
- US-A- 3 332 106
- US-A- 5 006 358
- US-A1- 2005 006 208

## Description

### Field of the invention

The present invention finds application in food processing industry, and particularly relates to an apparatus for forming and calibrating a dough disk.

### Background art

The process of forming dough disks, such as for pizza or the like includes two sequential basic steps: pressing and sheeting.

Pressing is aimed at imparting a substantially disk-like shape to the starting dough portion, which is usually of substantially spheroidal shape. On the other hand, sheeting is configured to impart the desired height and diameter, possibly different as needed, to the pressed dough.

Also, optimized sheeting has been known to require the output dough disk element to have as homogeneous and uniform geometry as possible. For this purpose, apparatus have been provided in the art which not only press the dough into a disk element but also ensure its "calibration" , i.e. lateral retention of the dough to ensure that it has a well-defined disk geometry.

One example of such apparatus is known from US 6,398,539. Such apparatus comprises a working surface for supporting one or more dough portions to be processed, a pressing die which is vertically movable relative to the surface to a position in which it interacts with the dough to form the disk element and a ring element, disposed at the periphery of the press, which is also vertically movable to a position in which it substantially contacts the surface for lateral retention and calibration of the pressed dough.

The motion of the press and that of the ring element are coordinated, so that as the one moves in one direction, the other moves in the same direction and vice versa. This is because the ring element is mounted to the actuator of the press by helical springs.

One drawback of this prior art solution is that during the downward stroke of the press and the ring element, i.e. during the pressing step, lateral dough leakages may occur due to a wrong position of the ring element.

Also, during the subsequent upward stroke, the pressed dough may stick with the press, and affect process repeatability and quality of the finished product. For this purpose, prior art apparatus have various release devices, which increase both manufacturing costs and times.

US 3332106 discloses a manual food dough forming and calibrating device.

### Disclosure of the invention

The object of the present invention is to overcome the above drawbacks, by providing an apparatus for forming and calibrating dough that is highly efficient and relatively cost-effective.

A particular object is to provide an apparatus that can impart a precise geometry to the dough disk element obtained thereby.

An additional object is to provide an apparatus that allows the dough disk element to be easily released once it has been pressed, without using any auxiliary release device.

Yet another object of the invention is to provide a method of forming dough disk elements with maximized throughput and minimized scrap.

These and other objects, as better explained hereafter, are fulfilled by an apparatus for forming and calibrating dough disk elements as defined in claim 1.

In another aspect, the invention relates to a method for forming and calibrating dough disk elements as defined in claim 10.

Advantageous embodiments of the invention are defined in accordance with the dependent claims.

### Brief description of the drawings

Further features and advantages of the invention will be more apparent from the detailed description of a preferred, non-limiting embodiment of an apparatus of the invention, which is described as a non-limiting example with the help of the annexed drawings, in which:
FIG. 1 is a perspective view of an apparatus of the invention;
FIG. 2 is a side view of the apparatus of Figure 1;
FIGS. 3 to 7 are sectional side views of the apparatus of Figure 1 in successive operating steps;
FIG. 8 is an enlarged view of certain details of FIG. 4.

### Detailed description of a preferred embodiment

Referring to the above figures, the apparatus of the invention, generally configurated by numeral 1, is particularly suitable for forming and calibrating dough disk elements D, such as for pizza or the like.

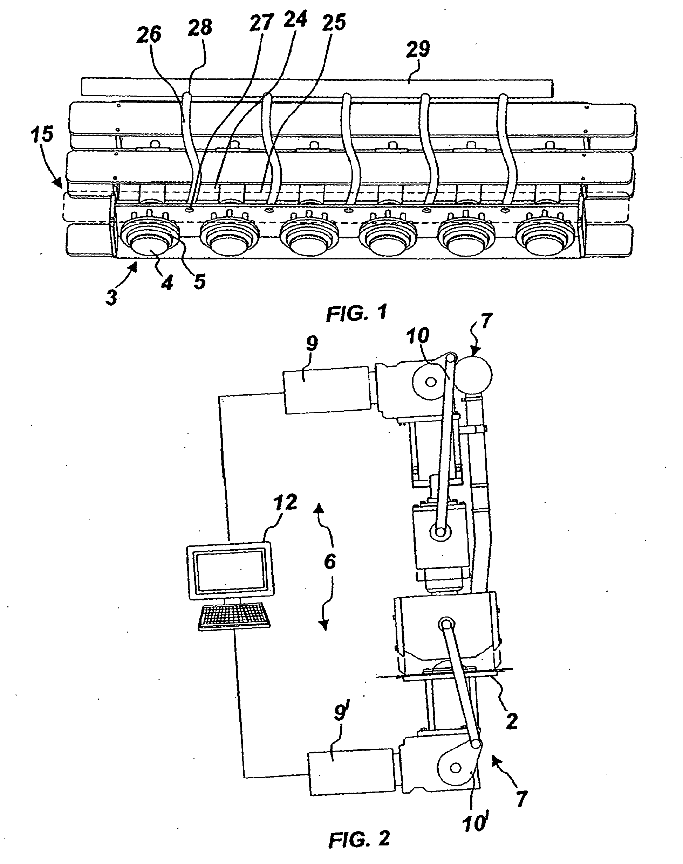

As shown in Figures 1 and 2, the apparatus 1 essentially comprises a working surface 2, which may be substantially horizontal, facing towards six processing heads, generally indicated by numeral 3, each comprising a pressing die 4 and a retention ring element 5 at the periphery thereof.

While reference will be made herein, unless otherwise stated, to one pressing die 4 and one ring element 5, it shall be understood that the apparatus 1 may include any number of pressing diees 4 and/or ring elements 5 without departure from the scope of the invention, as defined by the contents of the annexed claims.

The apparatus 1 comprises actuator means, generally configurated by numeral 6, which operate on the pressing die 4 and the ring element 5 to impart thereto a reciprocating motion towards and away from the working surface 2.

In the invention, the actuator means 6 includes a first motor 9, which is mechanically connected via a first mechanism 10 to the pressing die 4, and a second motor 9', which is mechanically connected via a second mechanism 10' to the ring element 5.

Particularly, the pressing die 4 is movable in a vertical direction or anyway in a direction having at least one vertical component, between a distal position and a proximal position relative to the surface 2, to press the dough portion into the disk element D.

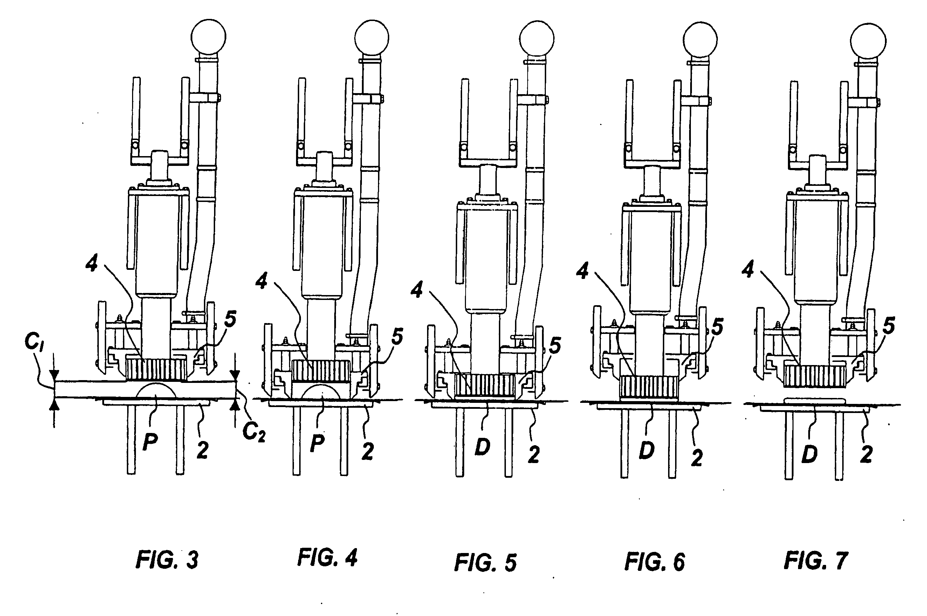

It shall be understood that the distal position, as shown in Figures 3, 4 and 7, is the maximum height position of the pressing die 4 relative the surface 2 in its vertical stroke C₁.

Also, it shall be understood that the proximal position, as shown in Figures 5 and 6, is the minimum height position of the pressing die 4 relative the surface 2 in its vertical stroke C₁.

The distal and/or proximal positions may change from one cycle to another, e.g. according to the amount, and hence the size of the input dough.

On the other hand, the retention ring element 5 is also vertically movable between a rest position away from the surface 2, as shown in Figures 3, 6 and 7, and a work position, as shown in Figures 4 and 5, in which it is substantially in contact with the surface, thereby running the stroke C₂. Thus, in its work position the ring element 5 will laterally retain the dough as the latter is being pressed.

The working surface 2 will support one or more dough portions P to be processed, and may be of fixed or continuous type, e.g. comprising a belt conveyor or the like. In the latter case, the reciprocating motion of the pressing die 4 and the retention ring element 5 shall be coordinated, in a manner known per se, with the belt conveyor.

If the working surface 2 is of continuous type, then the processing heads 3, comprising the pressing die 4 and the retention ring element 5, may be configured to move in the same direction as the dough portion P during interaction therewith, thereby allowing processing of the dough as it moves, as taught by the Italian patent application VI2007A000148, which may be consulted for reference.

Preferably, the processing heads 3 may be further configured to move forward substantially at the same speed as the dough portion P as they interact therewith.

The first and second motors 9, 9' include control means, generally configurated by numeral 7, which are regulated to only allow the pressing die 4 to move away from the proximal position when the ring element 5 has already moved away from the work position, for easier release of the disk element D so formed.

Once the ring element 5 has left its work position to move back to the rest position, any stress developed upon interaction between the lateral part 8 of the ring element 5 and the dough disk D so formed will be eliminated, for easier release of the disk element D from the pressing die 4 as the surface 2 moves away 2.

Advantageously, the control means 7 may be regulated for the pressing die 4 to only reach the proximal position when the ring element 5 has reached the work position.

As the press 4 ends its stroke C₁, the pressed dough P will laterally contact the inner lateral wall 8 of the ring element 5, which has already run its stroke C₂ and is already in its work position in contact with the surface 2, as shown in Figure 5, so that the dough P is not allowed to leak through the wall 8.

It shall be understood that the stroke C₁ of the pressing die 4 is the distance between the distal and proximal positions, whereas the stroke C₂ of the ring element 5 is the distance between the rest and work positions.

This may prevent any lateral dough leakage during the pressing step and allow accurate calibration of the disk element D so formed.

It shall be understood that the control means 7 are regulated for the pressing die 4 to be moved away from the proximal position, only when the ring element 5 has moved away from the work position, whether or not the pressing die 4 reaches the proximal position only when the ring element 5 has reached the work position.

The combination of the two actions provides an apparatus in which any dough leakage during the pressing step is prevented, and the disk element D being formed is accurately calibrated, while ensuring easy release of the disk element D so formed from the press 4 as the surface 2 is moved away therefrom.

As used herein the term "control means" and derivatives is intended to configurate the features that provide the desired technical effect.

For instance, in order to cause the pressing die 4 to only move away from the proximal position when the ring element 5 has moved away from the work position, assuming that the mechanisms 10, 10' have substantially the same size and the motors 9, 9' have substantially the same speeds, i.e. that the pressing die 4 and the ring element 5 move at the same speed, the height of the ring element 5 in the rest position has to be lower than the height of the distal position of the pressing die 4.

In a preferred non-limiting embodiment of the invention, the control means 7 may have a speed regulating operation on the pressing die 4 and the ring element 5. For example, assuming that the mechanisms 10, 10' have substantially the same size and the strokes C₁ and C₂ have the same length, motors 9, 9' with different speeds may be selected.

In a preferred non-limiting embodiment, the control means 7 may be regulated to cause the ring element 5 to move at a higher speed than the pressing die 4.

Thus, still assuming that the mechanisms 10, 10' and the strokes C₁ and C₂ have the same length, if the ring element 5 and the pressing die 4 start to move towards the working surface 2 substantially at the same time and at the same height, the ring element 5 would anyway reach the work position when the press 4 has not reached the proximal position yet.

The control means 7 include a microprocessor unit 12 susceptible of adjusting the operational parameters of the motors 9, 9'.

This will allow accurate and simple adjustment of the speed and angle of rotation of the motors 9, 9'.

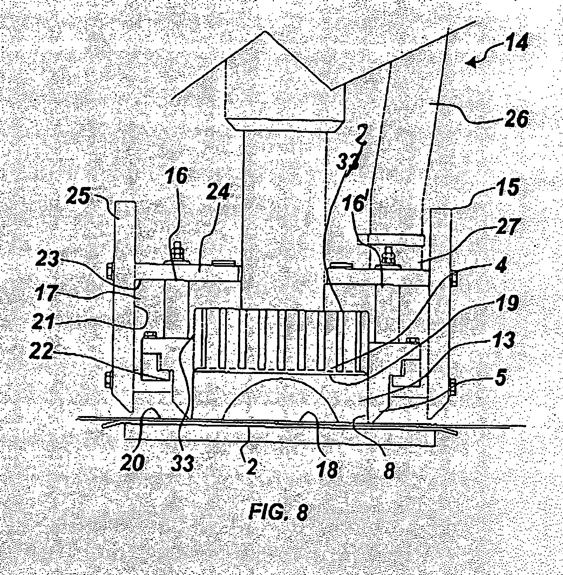

In the work position, as shown in Figures 4 and 5, the retention ring element 5 defines a first variable volume chamber 13 having the bottom wall 18 defined by the working surface 2, the side wall defined by the side wall 8 of the ring element 5 and a top wall defined by the bottom wall 19 of the pressing die 4, as shown in Figure 8.

In a preferred non-limiting embodiment of the invention, the apparatus 1 may include suction means, generally configurated by numeral 14, in fluid connection with the first chamber 13. In a preferred non-limiting embodiment, the suction means 14 may consist of a succession of pipes 26 having a first end 27 in fluid connection with the first suction chamber 13 and a second end 28 opening into a manifold 29, which is in turn connected with vacuum means, not shown and known per se.

By this arrangement, the flour released during the manufacturing process may be removed by suction, thereby maintaining the working surface clean and minimizing powder explosion risks.

Advantageously, the apparatus 1 may include a retention frame 15 which is integrally connected with the ring element 5 via connection members 16, 16', possibly damped by special springs. Such frame is also movable with the ring element 5 between the rest positions, as shown in Figures 3, 6 and 7 and the work position, as shown in Figures 4 and 5. In this case, the motor 9' may be in direct mechanical connection with the frame 15 as shown in Figure 2.

The frame 15, which has a substantially box-like C-shape, may consist of a substantially flat cross member 24, with two side walls 25 secured thereto.

Therefore, in the work position, the frame 15 defines a second chamber 17 with the working surface 2 and the ring element 5. It shall be noted that, in this position, the frame 15 is not in contact with the surface 2.

The second chamber 17, which is defined by the substantially toroidal cavity between the frame 15 and the ring element 5, has a bottom wall 20 defined by the working surface 2, a first side wall 21 defined by the inner surface of the side walls 25 of the frame 15, a second opposite side wall 22 defined by the outer surface of the ring element 5 and a top wall 23 defined by the inner surface of the cross member 24 of the frame 15.

The second chamber 17 may be in fluid connection with the first chamber 13, as explained in greater detail hereinafter. Thus, the suction means 14, which may include a pipe 26, will be in fluid connection with the second chamber 17.

In a preferred non-limiting embodiment of the invention, the pipe 26 may have the end 27 connected with the upper cross member 24 of the frame 15, as particularly shown in Figure 1.

As particularly shown in Figure 8, the pressing die 4 has a top surface 33 facing towards the second chamber 17, a bottom surface 19 facing towards the working surface 2 and an outer edge 32 facing towards the inner surface 8 of the ring element 5. The fluid connection between the first and second chambers 13 and 17 occurs through the cavity between the outer edge 32 of the press 4 and the inner surface 8 of the ring element, between which there is a clearance.

In operation, one exemplary work cycle of the apparatus 1 includes the following steps.

In a first step, as shown in Figure 3, the pressing die 4 and the ring element 5 are in the distal and rest positions respectively.

Once a dough portion P is level with the pressing die 4, the motor 9' drives the mechanism 10' to move the ring element 5 into the work position in contact with the surface 2, as shown in Figure 4. The motor 9 drives the mechanism 10 to move the pressing die 4 into the proximal position, to press the dough P into the disk element D, as shown in Figure 5.

The provision that the pressing step only ends, i.e. the press only reaches the proximal position when the ring element 5 has reached its work position, any lateral dough leakage is prevented and the disk D may be accurately calibrated.

Now, as shown in Figure 6, the motor 9' drives the mechanism 10' to move the ring element 5 back into the rest position, whereas the motor 9 drives the mechanism 10 to move the press 4 back into the distal position, as shown in Figure 7.

As mentioned above, in a preferred non-limiting embodiment of the invention, the working surface 2 may be of continuous type, allowing the dough P to be fed in a predetermined direction.

In this case, the pressing die 4 and the ring element 5 may move forward in the same direction and sense as the dough during interaction therewith, for processing the dough as it moves. Preferably, the pressing die 4 and the ring element 5 will move substantially at the same speed as the dough portion P as they interact therewith.

Also in this case, the apparatus 1 may operate by the work cycle as described above.

The above disclosure clearly shows that the invention fulfils the intended objects, and particularly meets the requirement to impart a precise geometry to the dough disk element obtained thereby.

The provision that the pressing die 4 only reaches the proximal position when the ring element 5 has reached its work position prevents any lateral leakage of dough P during the pressing step and allows accurate calibration of the disk element so formed.

The apparatus of this invention is susceptible of a number of changes and variants, within the inventive principle disclosed in the appended claims. All the details may be replaced by other technically equivalent elements, and the materials may be different depending on different needs.

While the apparatus has been described with particular reference to the accompanying figures, the numerals referred to in the disclosure and claims are only used for the sake of a better intelligibility of the invention and shall not be intended to limit the claimed scope in any manner.

## Claims

1. An apparatus for forming and calibrating dough disk elements, such as pizza or the like, comprising:
- a working surface (2) for supporting one or more dough portions (P);
- at least one pressing die (4) movable in a work direction substantially perpendicular to said surface (2) between a distal position and a proximal position relative to said working surface (2) for pressing a dough portion (P) and forming the disk element (D);
- at least one retention ring element (5) disposed peripherally to said at least one pressing die (4) and movable parallel to said work direction between a rest position away from said surface (2) and a work position substantially in contact with said surface (2) for laterally retaining the dough portion (P) during the pressing thereof;
- actuator means (6), operating on said at least one pressing die (4) and at least one ring element (5) to impart thereto a reciprocating motion towards and away from said working surface (2);
wherein said actuator means (6) include control means (7) operating on said at least one pressing die (4) and on said at least one ring element (5), which are configured to adjust their reciprocating motion in such a manner that said at least one pressing die (4) is moved away from said proximal position only when said at least one ring element (5) has been moved away from said work position, thus making the easier release of the disk element so formed, said control means (7) acting on said at least one pressing die (4) and said at least one retention ring element (5) in such a manner to regulate the speed and/or the stroke thereof, and further
wherein said actuator means (6) include a first motor (9), which is mechanically connected to said at least one pressing die (4) and a second motor (9'), which is mechanically connected to said at least one ring element (5), said control means (7) comprising a microprocessor unit (12) which interacts with said first motor (9) and said second motor (9') to adjust their reciprocating motion.

2. Apparatus as claimed in claim 1, wherein said control means (7) are configured in such a manner that said at least one pressing die (4) reaches the proximal position only when the ring element (5) has reached its work position, thus preventing any lateral leakage of dough during the pressing step and allow accurate calibration of the disk element (D) so formed.

3. Apparatus as claimed in claim 1 or 2, wherein said control means (7) are regulated to cause said at least one ring element (5) to move at a higher speed than said at least one pressing die (4).

4. Apparatus as claimed in one or more of the preceding claims, wherein said at least one retention ring element (5) defines, in said work position, the side wall of a first variable volume chamber (13) having a top wall defined by said at least one pressing die (4), said apparatus comprising suction means (14) in fluid connection with said first chamber (13).

5. Apparatus as claimed in the preceding claim, comprising a retention frame (15) associated and movable integrally with said at least one ring element (5) to define, in said work position, a second chamber (17) in fluid connection with said first chamber (13), said suction means (14) being in fluid connection with said second chamber (17).

6. Apparatus as claimed in the preceding claim, wherein said retention frame (15) comprises a top wall (24), which is mechanically connected to said ring element (5) and a side wall (25) susceptible of cooperating with said surface (2) to define said second chamber (17), said suction means (14) comprising a pipe (26) with an end (27) connected to the top wall (24) of said frame (15).

7. Apparatus as claimed in the preceding claim, wherein said pressing die (4) has a top surface (33) facing towards said second chamber (17), a bottom surface (19) facing towards said working surface (2) and an outer edge (32) facing towards the inner surface (8) and defining therewith a cavity for fluid connection of said first chamber (13) and second chamber (17).

8. Apparatus as claimed in one or more of the preceding claims,
wherein said working surface (2) is of continuous type, for feeding said one or more dough portions (P) in a predetermined direction of feed, said at least one pressing die (4) and at least one retention ring element (5) being configured to move forward in the same direction and sense as the dough (P) during interaction therewith, to be able to process the dough as it moves.

9. Apparatus as claimed in the preceding claim, wherein said at least one pressing die (4) and said at least one retention ring element (5) are configured to move substantially at the same speed as the dough portion (P) during interaction therewith.

10. A method for forming and calibrating dough disk elements, such as for pizza or the like, comprising the steps of:
- providing a working surface (2);
- providing at least one pressing die (4) movable along one direction substantially perpendicular to said surface (2);
- providing at least one retention ring element (5) at the periphery of said at least one pressing die (4) and movable parallel thereto;
- placing one or more dough portions (P) onto said surface (2);
- pressing at least one dough portion (P) by moving said pressing die (4) from a distal position to a proximal position relative to said surface (2) to form a dough disk element (D);
- calibrating said dough disk element (D) by moving said retention ring element (5) between a rest position away from said surface (2) and a work position substantially in contact therewith;
wherein said at least one pressing die (4) is only moved away from said proximal position when said at least one ring element (5) has been moved away from said work position, for easier release of the disk element so formed from the surface (2),
**characterized in that** the at least one pressing die (4) is actuated by a first motor (9) and the at least one ring element (5) is actuated by a second motor (9').

11. Method as claimed in claim 10, wherein said at least one pressing die (4) only reaches the proximal position when said at least one retention ring element (5) has reached its work position, to prevent any lateral leakage of dough during the pressing step and allow accurate calibration of the disk element so formed.

12. Method as claimed in claim 10 or 11, wherein said at least one retention ring element (5) has a higher speed and/or a longer stroke than said at least one pressing die (4).

13. Method as claimed in one or more of claims 10 to 12, wherein said retention ring element (5) defines, in said work position, the side wall of a first variable volume chamber (13) having a top wall defined by said pressing die (4), said method comprising a suction step from said first chamber (13).

## Patentansprüche

1. Vorrichtung zum Bilden und Kalibrieren Teig Scheibenelementen, wie Pizza oder dergleichen, umfassend:
- Eine Arbeitsfläche (2) zum Tragen von einem oder mehreren Stücken Teig (P);
- Wenigstens ein Presswerkzeug (4) beweglich in einer Arbeitsrichtung im wesentlichen senkrecht zu der Oberfläche (2) zwischen einer distalen Position und einer proximalen Position relativ zu der Arbeitsfläche (2) zum Pressen eines Teigklumpens (P) und Ausbilden der Platte (D);
- Mindestens ein Haltering (5) angeordnet peripher um wenigstens einen Presswerkzeug (4) und parallel zu der beweglichen Arbeit Richtung zwischen einer Ruhestellung weg von der Oberfläche (2) und einer Arbeitsposition im Wesentlichen in Kontakt mit der Oberfläche (2) zum seitlichen Halten des Teigklumpens (P) während der Betätigung derselben;
- Betätigungsmittel (6), die auf der mindestens einen Presswerkzeug (4) und mindestens einem Haltering (5) zu verleihen, um eine Hin und Herbewegung in Richtung auf und weg von der Arbeitsfläche (2), **dadurch gekennzeichnet, daß** die Betätigungsmittel (6) umfassen Steuermittel (7), die auf der mindestens einen Presswerkzeug (4) und auf dem wenigstens ein Haltering (5), die konfiguriert ist, um ihre hin-und hergehende Bewegung in einer solchen Weise anzupassen sind, dass der mindestens einen Presswerkzeug (4) weg von der proximalen Position bewegt wird, nur wenn der wenigstens ein Haltering (5) weg von der Arbeitsposition bewegt wurde, wodurch die leichteren Lösen des Scheibenelementes so gebildeten bewegt, wobei die Steuereinrichtung (7) wirken auf der mindestens einen Presswerkzeug (4) und dem mindestens einen Haltering (5) in einer solchen Weise, um die Geschwindigkeit und / oder die Regulierung Schlaganfall davon, und
wobei die Betätigungseinrichtung (6) einen ersten Motor (9), die mechanisch verbunden ist mit dem wenigstens einen Presswerkzeug (4) und einen zweiten Motor (9'), die mechanisch mit dem mindestens einen Haltering (5), wobei die Steuermittel (7), umfassend eine Mikroprozessoreinheit (12) zusammenwirkt, die mit dem ersten Motor (9) und den zweiten Motor (9') zu ihren Hin-und Herbewegung einzustellen.

2. Vorrichtung nach Anspruch 1, wobei die Steuereinrichtung (7) in einer solchen Weise, dass mindestens ein Preßwerkzeug (4) erreicht die proximale Position nur dann, wenn der Haltering (5) seine Arbeitsposition erreicht hat, konfiguriert sind, wodurch verhindert jedes seitliche Austreten von Teig während des Pressschritts und eine genaue Kalibrierung der Scheibe (D) so ausgebildet ist.

3. Vorrichtung nach Anspruch 1 oder 2, wobei die Steuermittel (7) reguliert werden zu bewirken, daß wenigstens ein Haltering (5) mit einer höheren Geschwindigkeit bewegen, als der mindestens einen Presswerkzeug (4).

4. Vorrichtung nach einem oder mehreren der vorhergehenden Ansprüche, wobei mindestens ein Haltering (5) definiert, in der Arbeitsposition, wobei die Seitenwand einer ersten Kammer mit variablem Volumen (13) mit einer oberen Wand, die durch die Betätigung Matrize (4), wobei die Vorrichtung eine Saugeinrichtung (14) in Fluidverbindung mit der ersten Kammer (13).

5. Vorrichtung nach dem vorhergehenden Anspruch, umfassend einen Halterahmen (15) zugeordneten beweglichen und einstückig mit dem wenigstens ein Haltering (5) zu definieren, in der Arbeitsposition, eine zweite Kammer (17) in Fluidverbindung mit der ersten Kammer (13), wobei die Saugmittel (14) in Fluidverbindung mit der zweiten Kammer (17).

6. Vorrichtung nach dem vorhergehenden Anspruch, wobei der Halterahmen (15) eine obere Wand (24), der mechanisch verbunden ist mit dem Haltering (5) und eine Seitenwand (25) empfänglich für Zusammenwirken mit der Oberfläche (2) zu definieren, wobei die zweite Kammer (17), wobei die Saugmittel (14) mit einem Rohr (26) mit einem Ende (27) mit der oberen Wand (24) des Rahmens (15).

7. Vorrichtung nach dem vorhergehenden Anspruch, wobei der Preßstempel (4) eine obere Fläche (33) zugewandte zweite Kammer (17), eine Bodenfläche (19) zugewandten Oberfläche der Arbeitselektrode (2) und eine Außenkante (32) zugewandten inneren Oberfläche (8) und mit diesem einen Hohlraum zur FluidVerbindung der ersten Kammer (13) und zweiten Kammer (17).

8. Vorrichtung nach einem oder mehreren der vorhergehenden Ansprüche, wobei die Arbeitsfläche (2) aus kontinuierlichen Typ, zum Zuführen des Teigs ein oder mehrere Knoten (P) in einer vorbestimmten Richtung der Zuführung, der mindestens einen Presswerkzeug (4) und mindestens einem Haltering (5) konfiguriert ist, vorwärts in die gleiche Richtung und Sinn wie der Teig (P) während der Wechselwirkung mit diesem, in der Lage sein, um den Teig zu verarbeiten, wie es sich bewegt.

9. Vorrichtung nach dem vorhergehenden Anspruch, wobei mindestens ein Preßwerkzeug (4) und dem mindestens einen Haltering (5) konfiguriert sind, um im Wesentlichen mit der gleichen Geschwindigkeit wie die Teigklumpen (P) während der Wechselwirkung mit dieser.

10. Verfahren zur Bildung und Kalibrieren Teig Scheibenelementen, wie Pizza oder dergleichen, umfassend die Schritte:
- Bereitstellen einer Arbeitsfläche (2);
- Bereitstellen von mindestens einem Preßstempel (4), der entlang einer Richtung im wesentlichen senkrecht zu der Oberfläche (2);
- Bereitstellen von mindestens einem Haltering (5) an der Peripherie der mindestens einen Presswerkzeug (4) und parallel dazu bewegbar ist;
- Anordnen einer oder mehr Teig Klumpen (P) auf die Oberfläche (2);
- Pressen mindestens ein Teigklumpen (P) durch Bewegen des Preßstempels (4) von einer distalen Position zu einer proximalen Position relativ zu der Oberfläche (2), um einen Teig Scheibenelement (D) zu bilden;
- Kalibrieren des Teigs Scheibenelement (D) durch Bewegen des Haltering (5) zwischen einer Ruhestellung weg von der Oberfläche (2) und einer Arbeitsposition im wesentlichen in Kontakt mit dieser, **dadurch gekennzeichnet, dass** mindestens ein Preßwerkzeug (4) wobei nur weg von der proximalen Position bewegt wird, wenn das wenigstens ein Haltering (5) weg von der Arbeitsposition bewegt wurde, um leichteren Lösen des Scheibenelementes so von der Oberfläche (2) gebildet zu bewegen,
**dadurch gekennzeichnet, dass** der mindestens eine Presswerkzeug (4) durch einen ersten Motor (9) und dem mindestens einen Haltering (5) durch einen zweiten Motor (9) betätigt wird.

11. Verfahren nach Anspruch 11, wobei mindestens ein Preßwerkzeug (4) nur erreicht die proximale Position, wenn der mindestens eine Haltering (5) seine Arbeitsposition erreicht hat, die ein seitliches Austreten von Teig während des Pressens zu verhindern Schritt und eine genaue Kalibrierung des Scheibenelement so gebildet ist.

12. Verfahren nach Anspruch 10 oder 11, wobei mindestens ein Haltering (5) eine höhere Geschwindigkeit und / oder der Hub länger als der wenigstens einen Presswerkzeug (4).

13. Verfahren nach einem oder mehreren der Ansprüche 10 bis 12 beansprucht, wobei die Haltering (5) definiert, in der Arbeitsposition, wobei die Seitenwand einer ersten Kammer mit variablem Volumen (13) mit einer oberen Wand, die durch die Preßstempel (4), wobei das Verfahren einen Absaugschritt aus der ersten Kammer (13).

## Revendications

1. Un appareil pour former et calibrer des éléments en forme de disque de pâte alimentaire, comme pâte à pizza ou analogue, comprenant:
- une surface de travail (2) destinée à supporter une ou plusieurs portions de pâte (P);
- au moins une tête de pressage (4) mouvant dans une direction de travail sensiblement perpendiculaire à ladite surface (2) entre une position distale et une position proximale par rapport à ladite surface de travail (2) pour presser une portion de pâte (P) et former l'élément en forme de disque (D);
- au moins un élément annulaire de retenue (5) disposé à la périphérie de ladite au moins une tête de pressage (4) et mouvant parallèlement à ladite direction de travail entre une position de repos à distance de ladite surface (2) et une position de travail sensiblement en contact avec ladite surface (2) pour retenir latéralement la masse de pâte (P) pendant la compression de celui-ci;
- un moyen d'actionnement (6) opérant sur ledit au moins une tête de pressage (4) et au moins un élément annulaire (5) pour conférer à ceux-ci un mouvement alternatif vers et à l'écart de ladite surface de travail (2);
dans lequel ledit moyen d'actionnement (6) comprend un moyen de contrôle (7) opérant sur ladite au moins une tête de pressage (4) et sur ledit au moins un élément annulaire (5), qui est configuré pour ajuster leur mouvement alternatif de telle sorte que ladite au moins une tête de pressage (4) est écartée de ladite position proximale seulement lorsque ledit au moins un élément annulaire (5) a été écarté de ladite position de travail, ce qui rend plus facile le détachement de l'élément en forme de disque ainsi formé, ledit moyen de contrôle (7) agissant sur ladite au moins une tête de pressage (4) et sur ledit au moins un élément annulaire de retenue (5) de telle manière à réguler la vitesse et/ou la course de ceux-ci, et en outre
dans lequel ledit moyen d'actionnement (6) comprend un premier moteur (9) qui est relié mécaniquement à ladite au moins une tête de pressage (4) et un second moteur (9') qui est relié mécaniquement audit au moins un élément annulaire (5), ledit moyen de contrôle (7) comprenant une unité de microprocesseur (12) qui coopère avec ledit premier moteur (9) et ledit second moteur (9') pour régler leur mouvement alternatif.

2. Appareil selon la revendication 1, dans lequel ledit moyen de contrôle (7) est configuré de telle sorte que ladite au moins une tête de pressage (4) atteint la position proximale seulement lorsque l'élément annulaire (5) a atteint sa position de travail, ce qui empêche toute fuite latérale de la pâte pendant l'étape de pression et qui permette une calibration précise de l'élément en forme de disque (D) ainsi formé.

3. Appareil selon la revendication 1 ou 2, dans lequel ledit moyen de contrôle (7) est réglé pour amener ledit au moins un élément annulaire (5) à se déplacer à une vitesse plus élevée que ladite au moins une tête de pressage (4).

4. Appareil selon l'une ou plusieurs des revendications précédentes, dans lequel ledit au moins un élément annulaire de retenue (5) définit, dans ladite position de travail, la paroi latérale d'une première chambre à volume variable (13) ayant une paroi supérieure définie par ladite au moins une tête de pressage (4), ledit appareil comprenant un moyen d'aspiration (14) en communication fluidique avec ladite première chambre (13).

5. Appareil selon la revendication précédente, comprenant une armature de maintien (15) associée et mobile de manière unitaire avec ledit au moins un élément annulaire (5) pour définir, dans ladite position de travail, une seconde chambre (17) en communication fluidique avec ladite première chambre (13), ledit moyen d'aspiration (14) étant en communication fluidique avec ladite seconde chambre (17).

6. Appareil selon la revendication précédente, dans lequel ladite armature de retenue (15) comprend une paroi supérieure (24), qui est relié mécaniquement à l'élément annulaire (5) et une paroi latérale (25) susceptible de coopérer avec ladite surface (2) pour définir ladite seconde chambre (17), ledit moyen d'aspiration (14) comprenant un tuyau (26) avec une extrémité (27) reliée à la paroi supérieure (24) de ladite armature (15).

7. Appareil selon la revendication précédente, dans lequel ladite tête de pressage (4) comporte une surface supérieure (33) tournée vers ladite seconde chambre (17), une surface inférieure (19) tournée vers ladite surface de travail (2) et un bord extérieur (32) tournée vers la surface intérieure (8) et définissant avec celui-ci une cavité pour la communication fluidique de ladite première chambre (13) et la seconde chambre (17).

8. Appareil selon l'une ou plusieurs des revendications précédentes, dans lequel ladite surface de travail (2) est du type continu pour amener ladite une ou plusieurs portions de pâte (P) dans une direction prédéterminée, ladite au moins une tête de pressage (4) et au moins un élément annulaire de retenue (5) étant configuré pour se déplacer dans la même direction et sens que la pâte (P) pendant l'interaction avec celle-ci, pour réussir à traiter la pâte lors de son déplacement.

9. Appareil selon la revendication précédente, dans lequel ladite au moins une tête de pressage (4) et ledit au moins un élément annulaire de retenue (5) sont configurés pour se déplacer sensiblement à la même vitesse que la portion de pâte (P) pendant l'interaction avec celle-ci.

10. Procédé pour former et calibrer des éléments en forme de disque de pâte alimentaire, comme pâte à pizza ou analogue, comprenant les étapes consistant à:
- fournir une surface de travail (2);
- fournir au moins une tête de pressage (4) mobile le long d'une direction sensiblement perpendiculaire à ladite surface (2);
- fournir au moins un élément annulaire de retenue (5) à la périphérie de ladite au moins une tête de pressage (4) et pouvant se déplacer parallèlement à celle-ci;
- placer un ou plusieurs portions de pâte (P) sur ladite surface (2);
- presser au moins une portion de pâte (P) par déplacement de ladite tête de pressage (4) à partir d'une position distale à une position proximale par rapport à ladite surface (2) pour former un élément de pâte (D) en forme de disque;
- calibrer ledit élément de pâte (D) en forme de disque par déplacement dudit élément annulaire de retenue (5) entre une position de repos à distance de ladite surface (2) et une position de travail sensiblement en contact avec celle-ci;
dans lequel ladite au moins une tête de pressage (4) n'est écartée de ladite position proximale que lorsque ledit au moins un élément annulaire (5) a été écarté de ladite position de travail, ce qui rend plus facile le détachement de l'élément en forme de disque ainsi formé de la surface (2),
**caractérisé en ce que** ladite au moins une tête de pressage (4) est actionnée par un premier moteur (9) et ledit au moins un élément annulaire (5) est actionnée par un second moteur (9').

11. Procédé selon la revendication 10, dans lequel ladite au moins une tête de pressage (4) atteint la position proximale seulement lorsque ledit au moins un élément annulaire de retenue (5) a atteint sa position de travail, pour empêcher toute fuite latérale de la pâte lors de l'étape de pressage et pour permettre une calibration précise de l'élément en forme de disque ainsi formé.

12. Procédé selon la revendication 10 ou 11, dans lequel ledit au moins un élément annulaire de retenue (5) a une vitesse plus élevée et/ou une course plus longue que ladite au moins une tête de pressage (4).

13. Procédé selon l'une ou plusieurs des revendications 10 à 12, dans lequel ledit élément annulaire de retenue (5) définit, dans ladite position de travail, la paroi latérale d'une première chambre à volume variable (13) ayant une paroi supérieure définie par ladite tête de pressage (4), ledit procédé comprenant une étape d'aspiration de ladite première chambre (13).
